Europäisches Patentamt

European Patent Office

Office européen des brevets

(11) Numéro de publication: **0 346 191**
A1

# DEMANDE DE BREVET EUROPEEN

(21) Numéro de dépôt: **89401517.1**

(22) Date de dépôt: **02.06.89**

(51) Int. Cl.⁴: **B 62 D 17/00**
B 60 G 15/06

(30) Priorité: **07.06.88 FR 8807529**

(43) Date de publication de la demande:
**13.12.89 Bulletin 89/50**

(84) Etats contractants désignés: **BE DE ES GB IT**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Carduner, Jean-Jacques**
**1, rue des Vignerons**
**F-95110 Sannois (FR)**

**Andrieu, Jean-Christophe**
**3, Passage Brady**
**F-75010 Paris (FR)**

(54) **Dispositif correcteur de l'épure de braquage lié à la jambe de force élastique d'une roue directrice d'un véhicule automobile.**

(57) Le levier (13) de commande d'orientation angulaire de la jambe de force, porte une rotule (8) d'accouplement avec la biellette de direction (9). Il est articulé en (14) sur le corps de l'amortisseur (4) selon un axe (15) et son autre extrémité qui porte une articulation (16) est entraînée par une barre (17) articulée selon un axe (18) dans une platine (19). Cette platine pivote autour de l'axe de la jambe de force grâce au roulement (20) qui la relie à la structure (6).

Ce dispositif permet le montage dans une position haute du mécanisme de commande de direction d'une suspension de type Mac-Pershon sans obligation de rallongement des biellettes.

FIG. 2

EP 0 346 191 A1

**Description**

# DISPOSITIF CORRECTEUR DE L'EPURE DE BRAQUAGE LIE A LA JAMBE DE FORCE ELASTIQUE D'UNE ROUE DIRECTRICE D'UN VEHICULE AUTOMOBILE

La présente invention concerne un mécanisme monté sur une jambe de force élastique de roue directrice pourvue d'un levier de direction et permettant de corriger au cours du débattement de la roue les variations de braquage.

De telles jambes de force élastiques pour roues directrices sont connues : le brevet n° 1 149 962 décrit parfaitement le principe d'une suspension de type Mac-Pershon équipée de telles jambes de force et le brevet n° 2 457 780 décrit différents modes de réalisation de la dite jambe de force.

Avec ce type de suspension, la position en hauteur de levier de commande d'orientation angulaire de la jambe de force par rapport au bras inférieur de suspension, permet de remonter la fixation de la crémaillère de commande de la direction, et de libérer un volume utilisable pour le logement d'organes mécaniques.

Plus la position du levier de commande d'orientation est élevée par rapport au bras inférieur de suspension, plus la bielle, qui assure la liaison entre ce levier et la crémaillère, doit être longue. La hauteur maximum est atteinte lorsque la dite bielle a son dispositif d'articulation avec la crémaillère, voisin de la bielle opposée.

L'invention a pour but de respecter l'épure de direction au cas où l'architecture ne permet pas de rallonger les bielles ou de baisser le mécanisme de direction.

Selon une forme de réalisation préférentielle, une barre, formant levier de commande d'orientation et portant la rotule de liaison avec la biellette de direction, est articulée à une de ses extrémités sur le corps de la partie non suspendue de la jambe de force ; son autre extrémité est liée par l'intermédiaire d'une autre barre à l'extrémité de l'élément suspendu de la jambe de force. Ainsi, lorsque la longueur de la jambe de force varie, la position en hauteur de la rotule par rapport à l'élément non suspendu varie elle aussi dans un rapport déterminé pour assurer une correction géométrique satisfaisante.

Les dessins annexés illustrent l'invention.

- La figure 1 illustre sur une coupe transversale d'une voiture, la longueur de la bielle de direction en fonction de sa hauteur par rapport au bras inférieur de suspension.

- La figure 2 montre une forme de réalisation à barres articulées.

- Les figures 3 et 4 montrent la cinématique de la réalisation selon la figure 2.

- Les figures 5 et 6 montrent la cinématique d'une autre forme de réalisation.

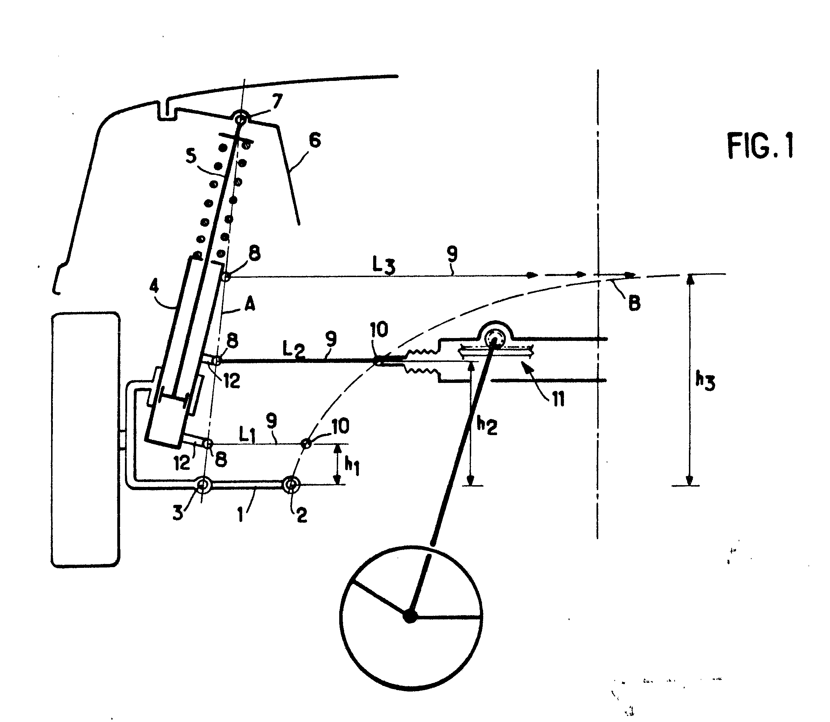

- La figure 1 montre sur une coupe transversale d'une voiture la disposition d'une partie des organes constituant la suspension et l'orientation des roues avant : Un bras inférieur de suspension 1 articulé sur le chassis du véhicule en 2 est lié par un moyen approprié 3 sur le corps d'amortisseur 4 qui porte un levier de commande de direction 12 avec une liaison comme une rotule 8 avec la biellette de direction 9.

La tige 5 de l'amortisseur 4 est fixée par un moyen comme une rotule 7 sur la structure 6 de la voiture. La biellette de direction 9 est liée en 10 par une rotule avec le boitier de direction 11. L'épure de la direction impose que si le lieu des centres de la rotule 8 est la courbe A, le lieu des centres de la rotule 10 est la courbe B. Lorsque la biellette 9 se trouve à une distance h1 du bas de suspension, sa longeur est L1. Lorsque la biellette 9 se trouve à une distance h2 du bras de suspension, sa longueur est L2. On voit que lorsque la biellette 9 se trouve à une hauteur h3 du bras de suspension, sa longueur est trop grande pour être liée au boîtier de direction 11.

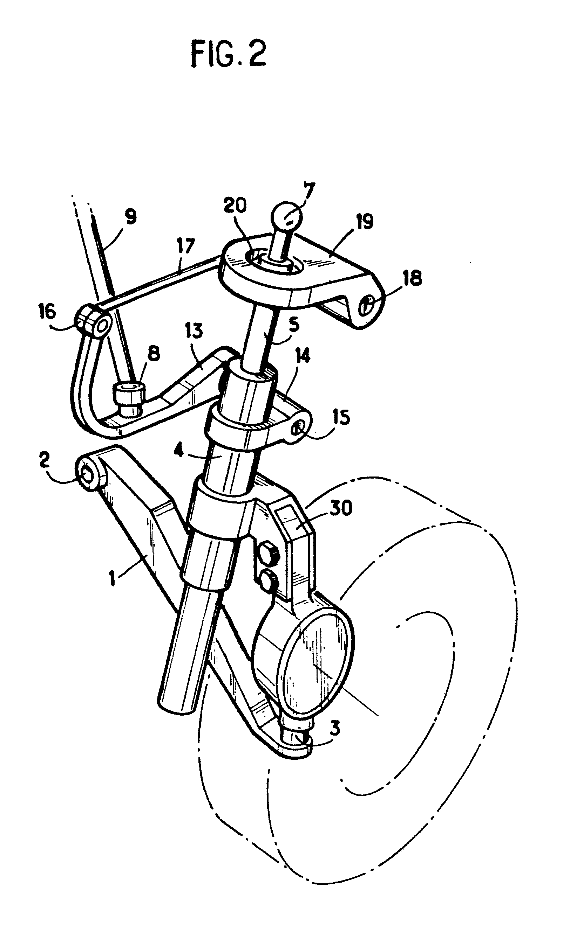

- La figure 2 montre une vue en perspective d'une suspension de type Mac-Pershon avec un mécanisme d'asservissement par bras articulés de la position du levier de commande d'orientation angulaire de la jambe de force. Un bras inférieur de suspension 1 articulé en 2 sur le chassis du véhicule, est lié par un moyen approprié comme une rotule 3 sur le corps de l'amortisseur 4 par l'intermédiaire d'un porte fusée 30, le levier 13 de commande d'orientation angulaire de la jambe de force, porte une rotule 8 d'accouplement avec la biellette de direction 9. Il est articulé en 14 sur le corps de l'amortisseur 4 selon un axe 15 et son autre extrémité qui porte une articulation 16 est entrainée par une barre 17 articulée selon un axe 18 dans une platine 19. Cette platine pivote autour de l'axe de la jambe de force grâce au roulement 20 qui la relie à la structure 6.

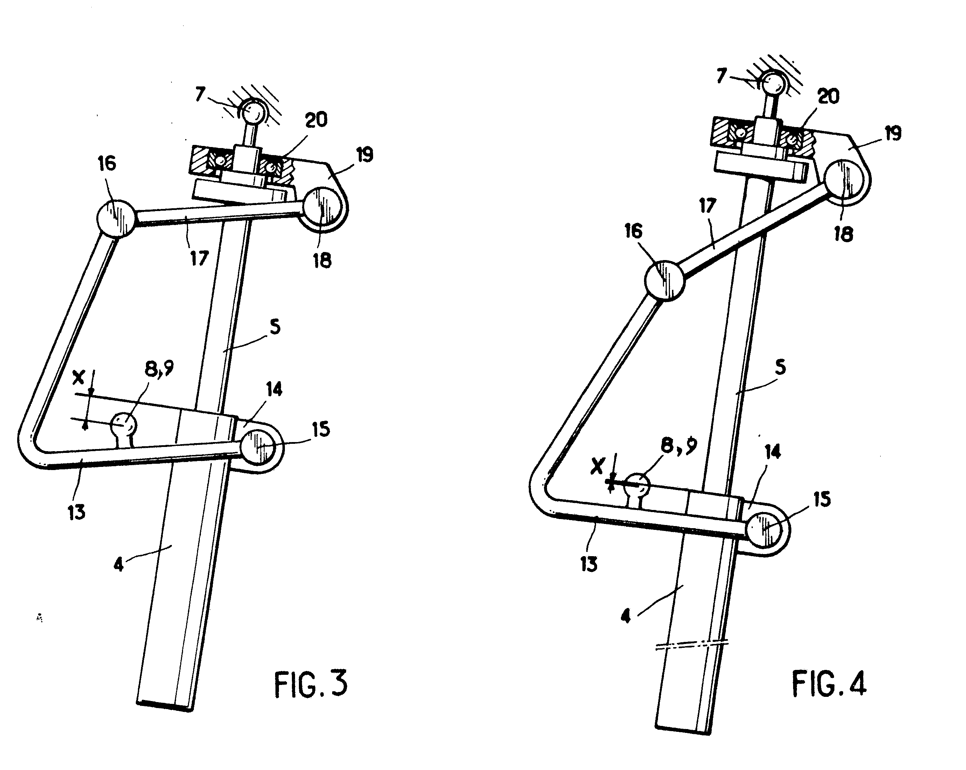

- Les figures 3 et 4 représentent la cinématique du dispositif décrit précédemment : on voit bien la variation de déplacement Z de la rotule 8 par rapport au corps de l'amortisseur 4 en fonction du déplacement du dit amortisseur.

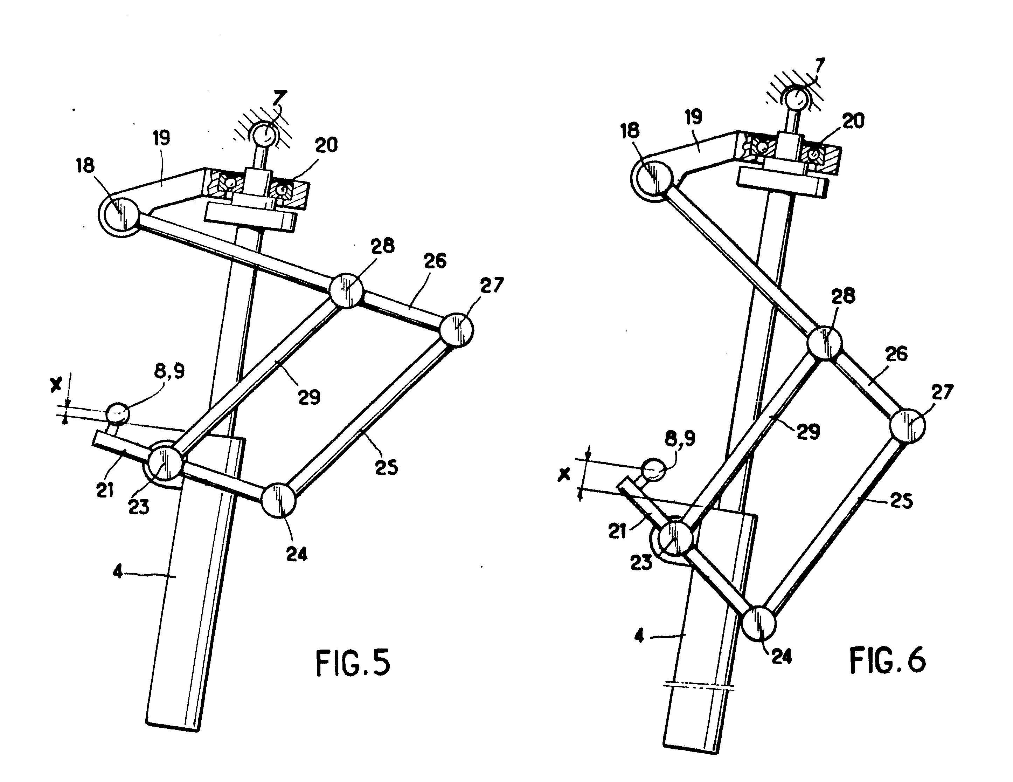

- Les figures 5 et 6 représentent la cinématique du dispositif utilisant une autre forme de réalisation. Le levier 21 de commande d'orientation angulaire de la jambe de force porte une rotule 8 d'accouplement avec la biellette de direction 9. Il est articulé en 23 sur le corps de l'amortisseur 4 et son autre extrémité qui porte une articulation 24, est entraînée par l'intermédiaire de la bielle 25 ; cette bielle qui porte une autre articulation 27 est actionnée par une barre 26. La barre 26 qui est articulée selon un axe 18 dans une platine 19, prend appui sur l'articulation 28 portée par l'extrémité d'une autre bielle 29 de même longueur que la bielle 25 et articulée sur l'axe 23. Le segment de la barre 26 compris entre les articulations 27 et 28 à la même longueur que le segment du levier 21 compris entre les articulations 23 et 24. Les bielles de même longueur 25 et 29 et les segments du levier 21 et de la barre 26 compris respectivement entre les articulations 23 et 24 et 27 et 28 ayant la même longueur, forment un parallélogramme déformable. On voit bien le déplacement A de la rotule 8 en fonction du déplacement du corps de l'amortisseur 4.

## Revendications

1) Dispositif correcteur de braquage d'une jambe de force élastique pour roues directrices destiné à être disposé entre la partie suspendue d'un véhicule automobile, et une partie non suspendue du dit véhicule du type comportant un amortisseur à éléments télescopiques (4 et 5) porteur d'un levier (13) de commande d'orientation angulaire de la jambe de force au cours des débattements de la roue du véhicule caractérisée par le fait que le levier (13) qui porte la rotule de liaison (8) de la bielle de direction (9), est positionné sur la dite jambe de force par un moyen d'asservissement déterminé par la position relative de la partie suspendue par rapport à la partie non suspendue.

2) Dispositif d'orientation d'une jambe de force selon la revendication 1 caractérisé par le fait que le moyen d'asservissement est constitué par un système à bras respectivement articulés sur les deux éléments télescopiques de l'amortisseur.

3) Dispositif d'orientation d'une jambe de force selon la revendication 2 caractérisé par le fait que l'un des bras (13) formant levier porte une rotule (8) de liaison de la bielle de direction (9).

4) Dispositif d'orientation d'une jambe de force selon la revendication 3 caractérisé par le fait que les bras sont articulés entre eux (16).

5) Dispositif d'orientation d'une jambe de force selon la revendication 3 caractérisé par le fait que les bras (21 et 26) sont réunis l'un à l'autre par au moins deux biellettes (25 et 29) réalisant conjointement une liaison déformable.

FIG.1

FIG.2

FIG.3

FIG.4

EP 0 346 191 A1

FIG.5

FIG.6

EP 0 346 191 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 060 733 (PEUGEOT ET CITROEN) <br> * En entier * <br> --- | 1-4 | B 62 D 17/00 <br> B 60 G 15/06 |
| Y | GB-A- 748 133 (SYMONDSON) <br> * Page 1, ligne 74 - page 2, ligne 17; figure 1 * <br> --- | 1-4 | |
| A | FR-A-2 591 986 (RENAULT) <br> * Figure 1 * <br> --- | 1 | |
| A | DE-A-3 136 954 (AUDI NSU) <br> * Page 5, lignes 35-40; figure 1 * <br> ----- | 1 | |

**DOMAINES TECHNIQUES RECHERCHES (Int. Cl.4)**

B 62 D
B 60 G

Le présent rapport a été établi pour toutes les revendications

| Lieu de la recherche | Date d'achèvement de la recherche | Examinateur |
|---|---|---|
| LA HAYE | 14-09-1989 | MYON G.J-P. |